# EUROPÄISCHE PATENTANMELDUNG

(11) **EP 2 284 523 A1**
(43) Veröffentlichungstag der Anmeldung: **16.02.2011**
(21) Anmeldenummer: 09009760.1
(22) Anmeldetag: 28.07.2009
(51) Int. Cl.: G01N 21/88, G01R 31/26

(54) **Verfahren und Vorrichtung zur Inspektion von zumindest einer Solarzelle**

(71) Anmelder: VITRONIC Dr.-Ing. Stein Bildverarbeitungssysteme GmbH, 65189 Wiesbaden (DE)
(72) Erfinder: Kröninger, Dennis, 65195 Wiesbaden (DE); Heilmann, Geert, 65207 Wiesbaden (DE)
(74) Vertreter: Müller, Thomas Michael

(57) **Zusammenfassung**

Verfahren und Vorrichtung zur Inspektion von zumindest einer Solarzellen, wobei die Solarzelle (6) zum Emittieren von Licht elektrisch oder optisch angeregt wird und die Lichtemission der Solarzelle mittels eines bildgebenden Sensors (4) detektiert wird. Hierbei wird die Solarzelle zumindest zeitweise während der Detektion durch den bildgebenden Sensor mittels einer Hinterleuchtungseinheit (5) hinterleuchtet, um gleichzeitig zur funktionalen Überprüfung durch die Lumineszenz der Solarzelle auch eine Überprüfung auf mechanische Fehler, wie z.B. Mikrorisse, mithilfe der Hinterleuchtung durchführen zu können.

## Beschreibung

Die Erfindung betrifft ein Verfahren und eine Vorrichtung zur Inspektion von zumindest einer Solarzellen, wobei die Solarzelle elektrisch oder optisch angeregt wird.

Ein solches Verfahren ist aus der EP 1 840 541 A1 bekannt. Dort wird eine Solarzelle in Durchlassrichtung mit Strom beaufschlagt, so dass diese aufgrund ihrer Elektrolumineszenz Licht emittiert. Hierbei ist die Solarzelle innerhalb einer abgedunkelten Messbox aufgenommen. Eine Kamera detektiert das emittierte Licht, wobei aus den Kameraaufzeichnungen auf strukturelle Fehler, zum Beispiel in der Kristallstruktur der Solarzelle, geschlossen werden kann. Somit können fehlerhafte Solarzellen erkannt werden. Ferner können bei der Überprüfung von Solarmodulen, die aus einzelnen bereits miteinander verdrahteten Solarzellen bestehen, die jedoch noch nicht laminiert sind, Fehler in der Verdrahtung der einzelnen Solarzellen erkannt werden.

Nachteil ist hingegen, dass mechanische Fehler, wie zum Beispiel Randausbrüche, Risse oder Löcher, gar nicht oder nur schwer erkennbar sind. Hierzu sind weitere separate Prüfvorgänge erforderlich.

Aufgabe der vorliegenden Erfindung ist es, ein Verfahren und eine Vorrichtung der eingangs genannten Art bereit zu stellen, wobei neben strukturellen Fehlern auch mechanische Fehler zuverlässig erkannt werden.

Die Aufgabe wird erfindungsgemäß durch ein Verfahren zur Inspektion von zumindest einer Solarzellen, bei dem die Solarzelle zum Emittieren von Licht elektrisch oder optisch angeregt wird und die Lichtemission der Solarzelle mittels eines bildgebenden Sensors detektiert wird, gelöst, wobei die Solarzelle zumindest zeitweise während der Detektion durch den bildgebenden Sensor hinterleuchtet wird.

Somit ist gewährleistet, dass gleichzeitig einerseits strukturelle Fehler einer Solarzelle aufgrund der Detektion des emittierten Lichts erkannt werden und mechanische Fehler durch die Hinterleuchtung sichtbar werden. Strukturelle Fehler sind in der Regel Fehler in der kristallinen Struktur des Solarzellen, wie zum Beispiel Mikrorisse, die bei einer Auflichtanalyse oder einer Durchleuchtung nicht erkannt werden können. Mechanische Fehler hingegen sind zum Beispiel Kantenausbrüche, Risse oder Löcher, die mittels der Durchleuchtung erkennbar sind. Die Solarzelle kann hierbei optisch unter Ausnutzung ihrer Photolumineszenz mittels einer Lichtquelle, die die zu überprüfende Oberfläche zeitweise anstrahlt, oder elektrisch unter Ausnutzung ihrer Elektrolumineszenz angeregt werden, wobei die Solarzelle in ihrer Durchlassrichtung mit Strom beaufschlagt wird.

Das Verfahren eignet sich sowohl als Ausgangsprüfung in der Waferproduktion, wobei die Wafer eine Vielzahl von Solarzellen aufweisen, als auch als Eingangsprüfung in der Solarzellenproduktion, bei der einzelne Solarzellen oder Solarzellenstrings mit mehreren verdrahteten Solarzellen überprüft werden.

Um insbesondere Risse, die in der Regel vom Randbereich einer Solarzelle ausgehen, erkennen zu könne, ist vorzugsweise vorgesehen, dass die Aufnahme des bildgebenden Sensors die gesamte Breite der Solarzelle, insbesondere die gesamte Solarzelle, einschließlich der Ränder erfasst. Bei dem bildgebenden Sensor kann es sich um eine Zeilenkamera handelt, die entsprechend die gesamte Breite der Solarzelle erfassen sollte, oder um eine Matrixkamera, die in der Lage sein kann, eine gesamte Solarzelle abzubilden.

Bei einer optischen oder elektrischen Anregung der Solarzelle emittiert diese Licht in sehr geringer Intensität, so dass die Intensität der Hinterleuchtung an die Intensität der Lichtemission der Solarzelle angepasst sein muss, um aussagekräftige Messergebnisse zu erhalten.

Ferner emittieren Solarzellen Licht in einem ganz bestimmten Spektralbereich, so dass vorzugsweise auch der Spektralbereichs der Hinterleuchtung an den Spektralbereich der Lichtemission der Solarzelle angepasst sein sollte. Objektive haben häufig im Bereich unterschiedlicher Wellenlängen des Lichts unterschiedliche Schärfenebenen, so dass bei einer Hinterleuchtung in einem Spektralbereich, der deutlich von dem des emittierten Licht der Solarzelle abweichenden, das Messbild nicht vollständig scharf wäre. Diese Probleme können vermieden werden, wenn der Spektralbereich der Hinterleuchtung an denjenigen des emittierten Lichts der Solarzelle angepasst ist. Ebenso gibt es Kameras, die nur in einem bestimmten Wellenlängenbereich ihre optimale Empfindlichkeit aufweisen, oder es werden Filter verwendet, die sichtbares Licht herausfiltern und nur nicht sichtbares Licht passieren lassen, um ggf. störenden Einfluss von Umgebungsstreulicht zu vermeiden. In diesen Fällen muss der Spektralbereiche der Hinterleuchtung ebenfalls an den Spektralbereich des emittierten Lichtes der Solarzelle angepasst sein.

Die Aufgabe wird erfindungsgemäß ferner durch eine Vorrichtung zur Durchführung eines des vorangehend erläuterten Verfahrens zur Inspektion von zumindest einer Solarzellen gelöst, welche eine Einrichtung zum elektrischen oder optischen Anregen einer Oberfläche der Solarzelle zum Emittieren von Licht, sowie einen bildgebenden Sensor zur optischen Erfassung der Lichtemission der angeregten Oberfläche der Solarzelle umfasst, wobei eine Hinterleuchtungseinheit vorgesehen ist, welche die Solarzelle von der dem bildgebenden Sensor abgewandten Seite aus hinterleuchtet.

Es kann eine Halteeinrichtung für die Solarzelle vorgesehen sein, mittels derer die Solarzelle mit ihrer angeregten Oberfläche dem bildgebenden Sensor zugewandt gehalten ist. Die Halteeinrichtung kann beispielsweise durch eine Einrichtung zur elektrischen Kontaktierung der Solarzellen oder eines mehrere Solarzellen umfassenden Solarmoduls dargestellt sein.

Bei dem bildgebenden Sensor handelt es sich vorzugsweise um eine Matrixkamera oder eine Zeilenkamera.

Die Hinterleuchtungseinheit sollte derart ausgebildet sein, dass die Intensität des von der Hinterleuchtungseinheit emittierten Lichts an die Intensität der Lichtemission der Solarzelle angepasst ist. Ferner sollte sie auch derart ausgebildet sein, dass der Spektralbereichs des von der Hinterleuchtungseinheit emittierten Lichts an den Spektralbereich der Lichtemission der Solarzelle angepasst ist.

Für eine elektrische Anregung der Solarzelle umfasst die Einrichtung zum Anregen der Solarzelle Kontakte und eine Stromquelle, mittels derer die Solarzelle elektrisch kontaktiert und elektrisch beaufschlagt werden kann.

Für eine optische Anregung der Solarzelle umfasst die Einrichtung zum Anregen der Solarzelle eine Beleuchtungseinheit, mittels derer die Solarzelle optisch angeregt werden kann. Hierbei kann es sich um eine Lichtquelle handeln, die die Solarzelle anstrahlt, wobei die Beleuchtungseinheit während der Detektion des emittierten Lichts abgeschaltet wird. Ebenso kann ein Blitzlicht vorgesehen sein, um innerhalb kürzester Zeit eine hohe Lichtintensität zur Anregung zur Verfügung stellen zu können.

Eine bevorzugte Ausführungsform wird im folgenden anhand der Zeichnung näher erläutert. Hierin zeigt
- Figur 1: eine schematische Darstellung einer erfindungsgemäßen Vorrichtung und
- Figur 2: eine Darstellung des vom Sensor erfassten Bildes.

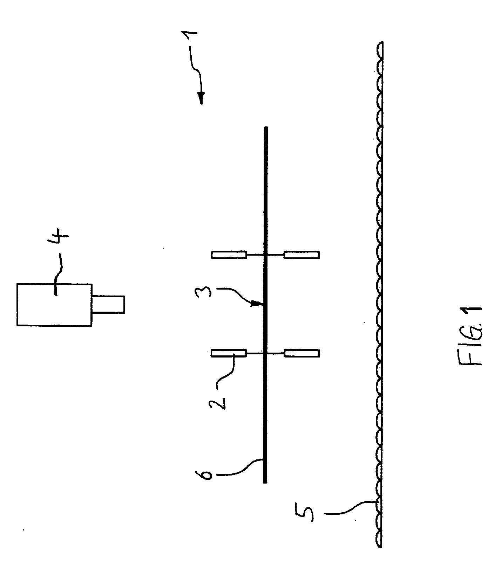

Figur 1 zeigt eine Vorrichtung 1 zur Inspektion einer Solarzelle 6. Die Solarzelle 6 ist mittels Kontakten 2 mit einer hier nicht dargestellten Stromquelle verbunden und kann in Durchlassrichtung mit Strom beaufschlagt werden. Hierbei emittieren die Solarzellen 6 Licht an einer zu überprüfenden Oberfläche 3, welches mittels eines bildgebenden Sensors 4, z. B. einer Zeilenkamera oder einer Matrixkamera, detektiert werden kann. Hierzu ist der bildgebende Sensor 4 der zu überprüfenden Oberfläche 3 gegenüberliegend angeordnet. Auf einer vom bildgebenden Sensor 4 abgewandten Seite der Solarzelle 6 ist eine Hinterleuchtungseinheit 5, z. B. in Form einer LED-Flächenlichtquelle, angeordnet. Mittels der Hinterleuchtungseinheit 5 wird die Solarzelle 6 zumindest zeitweise während der Detektion durch den bildgebenden Sensor 4, d.h. während der Aufnahme des Sensors 4, hinterleuchtet. Während eines Detektionszeitintervalls, d.h. während der Aufnahmezeit vergleichbar mit der Auslösezeit einer herkömmlichen Kamera, findet somit zumindest zeitweise eine Hinterleuchtung statt, wobei die Hinterleuchtung zeitlich während des Detektionsintervalls beginnen und enden kann. Genauso ist es möglich, dass der Beginn der Hinterleuchtung zeitlich vor dem Detektionsintervall liegt und/oder das Ende der Hinterleuchtung zeitlich nach dem Detektionsintervall liegt.

Die Vorrichtung 1 eignet sich sowohl zur Prüfung von einzelnen Solarzellen als auch von bereits miteinander verbundenen Solarzellen, die auch als Solarzellen-Strings bezeichnet werden. Von besonderem Vorteil ist, dass durch die Anregung der zu überprüfenden Solarzellen zum einen die Struktur der Solarzellen überprüft werden kann und durch die Hinterleuchtung mechanische Fehler aufgedeckt werden können, wobei beide Prüfungen zeitgleich stattfinden und somit geringere Prüfungsintervalle realisiert werden können.

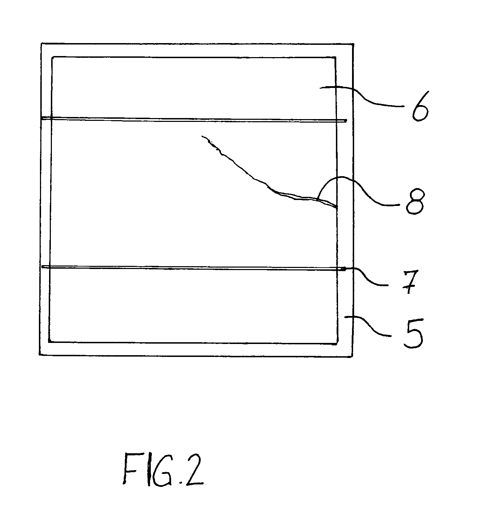

Figur 2 zeigt beispielhaft eine Aufnahme eines bildgebenden Sensors einer einzelnen Solarzelle 6, welche einerseits elektrisch angeregt wurde und somit Licht emittiert und zum anderen hinterleuchtet wurde. Durch das Elektroluminiszenzverfahren lässt sich beurteilen, ob die Solarzelle 6 vollumfänglich funktionstüchtig ist und ob Verdrahtungsfehler vorliegen. Durch das Hinterleuchtungsverfahren können gleichzeitig Risse 8 oder andere mechanische Fehler, wie zum Beispiel Kantenausbrüche oder Löcher, erkannt werden.

### Bezugszeichenliste

- **1**: Vorrichtung 1 zur Inspektion einer Solarzelle
- **2**: Kontakte
- **3**: zu überprüfende Oberfläche
- **4**: bildgebender Sensor
- **5**: Hinterleuchtungseinheit
- **6**: Solarzelle
- **7**: Verdrahtung
- **8**: Riss

## Patentansprüche

1. Verfahren zur Inspektion von zumindest einer Solarzelle (6), bei dem die Solarzelle (6) zum Emittieren von Licht elektrisch oder optisch angeregt wird und
die Lichtemission der Solarzelle (6) mittels eines bildgebenden Sensors (4) detektiert wird,
**dadurch gekennzeichnet,**
**dass** die Solarzelle (6) zumindest zeitweise während der Detektion durch den bildgebenden Sensor (4) hinterleuchtet wird.

2. Verfahren nach Anspruch 1,
**dadurch gekennzeichnet,**
**dass** die Aufnahme des bildgebenden Sensors (4) die gesamte Breite der Solarzelle (6), insbesondere die gesamte Solarzelle (6), einschließlich der Ränder erfasst.

3. Verfahren nach einem der vorangehenden Ansprüche,
**dadurch gekennzeichnet,**
**dass** die Intensität der Hinterleuchtung an die Intensität der Lichtemission der Solarzelle (6) angepasst ist.

4. Verfahren nach einem der vorangehenden Ansprüche,
**dadurch gekennzeichnet,**
**dass** der Spektralbereichs der Hinterleuchtung an den Spektralbereich der Lichtemission der Solarzelle (6) angepasst ist

5. Vorrichtung zur Durchführung eines der vorangehenden Verfahren zur Inspektion von zumindest einer Solarzelle (6) umfassend
eine Einrichtung zum elektrischen oder optischen Anregen einer Oberfläche (3) der Solarzelle (6) zum Emittieren von Licht, sowie
einen bildgebenden Sensor (4) zur optischen Erfassung der Lichtemission der angeregten Oberfläche (3) der Solarzelle (6),
**dadurch gekennzeichnet,**
**dass** eine Hinterleuchtungseinheit (5) vorgesehen ist, welche die Solarzelle (6) von der dem bildgebenden Sensor (4) abgewandten Seite aus hinterleuchtet.

6. Vorrichtung nach Anspruch 5,
**dadurch gekennzeichnet,**
**dass** eine Halteeinrichtung (2) für die Solarzelle (6) vorgesehen ist, mittels derer die Solarzelle (6) mit ihrer angeregten Oberfläche (3) dem bildgebenden
Sensor (4) zugewandt gehalten ist.

7. Vorrichtung nach einem der Ansprüche 5 oder 6,
**dadurch gekennzeichnet,**
**dass** der bildgebende Sensor (4) eine Matrixkamera oder eine Zeilenkamera ist.

8. Vorrichtung nach einem der Ansprüche 5 bis 7,
**dadurch gekennzeichnet,**
**dass** die Intensität des von der Hinterleuchtungseinheit (5) emittierten Lichts an die Intensität der Lichtemission der Solarzelle (6) angepasst ist.

9. Vorrichtung nach einem der Ansprüche 5 bis 8,
**dadurch gekennzeichnet,**
**dass** der Spektralbereichs des von der Hinterleuchtungseinheit (5) emittierten Lichts an den Spektralbereich der Lichtemission der Solarzelle (6) angepasst ist.

10. Vorrichtung nach einem der Ansprüche 5 bis 9,
**dadurch gekennzeichnet,**
**dass** die Einrichtung zum Anregen der Solarzelle (6) Kontakte (2) und eine Stromquelle aufweist, mittels derer die Solarzelle (6) elektrisch kontaktiert und elektrisch beaufschlagt werden kann.

11. Vorrichtung nach einem der Ansprüche 5 bis 10,
**dadurch gekennzeichnet,**
**dass** die Einrichtung zum Anregen der Solarzelle (6) eine Beleuchtungseinheit aufweist, mittels derer die Solarzelle (6) optisch angeregt werden kann.
